# EUROPEAN PATENT SPECIFICATION

(11) **EP 4 187 297 B1**
(45) Date of publication and mention of the grant of the patent: **18.12.2024**
(21) Application number: 22208987.2
(22) Date of filing: 23.11.2022
(51) Int. Cl.: G02B 6/44, G02B 6/38

(54) **FIBER OPTIC TERMINAL HAVING ONE OR MORE CONNECTION PORTS FOR RECEIVING FIBER OPTIC CONNECTORS HAVING A LATCHING TRIGGER**
FASEROPTISCHER ANSCHLUSS MIT EINEM ODER MEHREREN VERBINDUNGSANSCHLÜSSEN ZUR AUFNAHME VON FASEROPTISCHEN STECKERN MIT EINEM VERRIEGELUNGSAUSLÖSER
TERMINAL DE FIBRE OPTIQUE AYANT UN OU PLUSIEURS PORTS DE CONNEXION POUR RECEVOIR DES CONNECTEURS DE FIBRE OPTIQUE AYANT UN DÉCLENCHEUR DE VERROUILLAGE

(30) Priority: 24.11.2021 US 202163282747 P
(43) Date of publication of application: 31.05.2023
(73) Proprietor: Corning Research & Development Corporation, Corning, New York 14831 (US)
(72) Inventor: Ciechomski, Tomasz Andrzej, 91-728 Lodz (PL); Ruda, Michal, 95-060 Brzeziny (PL)
(74) Representative: Sturm, Christoph

(56) References cited:
- EP-A1- 1 006 380
- WO-A1-2014/049469
- WO-A1-2020/242847

## Description

### CROSS REFERENCE TO RELATED APPLICATIONS

This application claims the benefit of priority of U.S. Provisional Application Serial No. 63/282,747 filed on November 24, 2021.

### FIELD

The disclosure is directed to fiber optic terminals having one or more connection ports configured for receiving external fiber optic connectors having a latching trigger as a connector securing/release mechanism such as used on LC or SC connectors.

### BACKGROUND

Optical fiber is increasingly being used for a variety of applications, including but not limited to broadband voice, video, and data transmission in a variety of new and expanding applications. As bandwidth demands increase optical fiber is migrating deeper into these new communication networks such as fiber inside the premises applications and the like. As optical fiber extends deeper into these communication networks there exist a need for quickly and easily making optical connections in a quick and easy manner for the demands of these new application spaces.

Rugged fiber optic terminals and hardened fiber optic connectors were developed for making one or more plug and play optical connections for outdoor applications that can maintain optical performance in adverse environmental conditions such as extreme cold temperatures or wet and damp locations for extending optical networks toward subscribers. These fiber optic terminals and connectors provide a node for mating and demating to the optical network and provide the flexibility of locating the connection points in convenient locations for efficient network assembly, design and/or deployment. Conventional fiber optic terminals and connectors used for these outdoor environments are typically larger fiber optic terminals that accommodate hardened fiber optic connectors that use a rotating fastener for securing the connector such as a threaded coupling nut or bayonet that rotates about the connector for securing the ruggedized optical connection to the fiber optic terminal or device. Since these hardened connectors require a rotating fastener the fiber optic connectors are substantially larger than non-hardened fiber optic connectors. Once the optical lines transition into indoor spaces these robust hardened fiber optic terminals and fiber optic connectors are not required for the indoor environment. Moreover, the hardened robust solutions are typically large and bulky and not desired for indoor environments for these reasons and other reasons.

Thus, network operators may have a desire to use simplified fiber optic terminals for their optical networks for indoor space or protected environment that mate using typical indoor (i.e., non-hardened) fiber optic connectors, thereby improving space requirements, routing and aesthetics. Thus, there is an unresolved need for fiber optic terminals that can use non-hardened fiber optic connectors for the reasons discussed herein.

EP 1 006 380 A1 discloses an electrical and/or optical connector comprising a housing and a locking device being U-shaped with a pair of arms that fit into channels of the housing for securing a suitable device.

### SUMMARY

The disclosure is directed to fiber optic terminal (hereinafter "terminals") comprising at least one connection port having an optical connector opening extending toward or into a cavity of the terminal along with a flexible tab and actuator associated with the connection port for releasing an external connector from the connection port of the terminal.

The invention provides a fiber optic terminal according to claim 1.

Additional features and advantages will be set forth in the detailed description which follows, and in part will be readily apparent to those skilled in the art from that description or recognized by practicing the same as described herein, including the detailed description that follows, the claims, as well as the appended drawings.

It is to be understood that both the foregoing general description and the following detailed description present embodiments that are intended to provide an overview or framework for understanding the nature and character of the claims. The accompanying drawings are included to provide a further understanding of the disclosure, and are incorporated into and constitute a part of this specification. The drawings illustrate various embodiments and together with the description serve to explain the principles and operation.

### BRIEF DESCRIPTION OF THE FIGURES

**FIG. 1** is a top perspective view of an explanatory fiber optic terminal having a shell with a plurality of fiber optic connection ports for receiving external fiber optic connectors for making optical connections;
**FIG. 2** is a top perspective view of the fiber optic terminal of **FIG. 1** with an input fiber optic tether on the left-side and a plurality of external fiber optic connectors disposed in respective fiber optic connection ports to the right;
**FIG. 3** depicts a front view of the explanatory fiber optic terminal of **FIG. 2** with the input fiber optic connector on the left-side and a plurality of external fiber optic connectors having a latching trigger disposed in respective fiber optic connection ports to the right;
**FIG. 4** depicts a sectional view of the explanatory fiber optic terminal of **FIG. 2** showing the external fiber optic connector having a latching trigger disposed in the fiber optic connection port for optical mating with an internal fiber optic connector of the fiber optic terminal;
**FIG. 5** depicts a detailed sectional view of the flexible tab associated with the connection port of the fiber optic terminal of **FIG. 2** showing the flexible tab cooperating with the latching trigger of the external fiber optic connector disposed in the fiber optic connection port;
**FIG. 6** depicts a top view of the flexible tab associated with the connection port of the fiber optic terminal of **FIG. 2** configured for a fiber optic terminal having four fiber optic connection ports;
**FIGS. 7-9** are perspective views of the flexible tab of **FIG. 6****;**
**FIGS. 10 and 11** are perspective views of the adapter interface of the fiber optic terminal depicted in **FIG. 4****;**
**FIG. 12** are rear perspective view of the adapter interface of the fiber optic terminal depicted in **FIG. 4****;**
**FIG. 13** is a side view of the adapter interface of the fiber optic terminal depicted in **FIG. 4****;**
**FIG. 14** is a perspective view of the explanatory fiber optic terminal of **FIGS. 1 and 2** having dust plugs disposed within respective fiber optic connection ports of the terminal;
**FIG. 15** is a sectional view of the fiber optic terminal of **FIG. 14** having the dust plugs disposed within a respective fiber optic connection port of the terminal; and
**FIGS. 16 and 17** are respective sectional and perspective views of the dust plugs shown in **FIGS. 14** **and** **15****.**

### DETAILED DESCRIPTION

Reference will now be made in detail to the embodiments of the disclosure, examples of which are illustrated in the accompanying drawings. Whenever possible, like reference numbers will be used to refer to like components or parts.

The concepts disclosed are related to fiber optic terminals (hereinafter "terminals") for making fiber optic connections with external fiber optic connectors. The concepts disclosed use a flexible tab 250 disposed within a shell of the terminal for creating a scalable form-factor devices for manufacturing. The terminal comprises one or more connection ports along with an associated actuator(s) cooperating with flexible tabs for providing quick and easy release of an external connector from the connection port with a robust and reliable design that is intuitive to use. The terminals comprising flexible tab(s) disclosed herein may take many different constructions or configurations for supporting optical connections with different types of external fiber optic connectors as desired.

The terminals disclosed comprise at least one connection port disposed on the terminal and the connection port has an optical connector opening configured for receiving and optical mating of an external fiber optic connector (hereinafter "external connector") with an internal connector of the terminal. The disclosed terminals comprise a flexible tab disposed within the terminal and is associated with the connection port and an actuator that is capable of translating with respect to the terminal for engaging a portion of the flexible tab, thereby deflecting a portion of the flexible tab. Deflecting a portion of the flexible tab allows the releasing of an external connector that may secured within the connection port of the terminal. Generally speaking, the connection port may be configured for the specific connector intended to be received in the terminal. By way of explanation, the external connector may be secured to the terminal using a latch of the external connector such as used on a LC-type or a SC-type of connector.

The terminals have the flexible tab bowed to a normally-open position. Biasing the flexible tab to the normally-open position allowing insertion of the external connector into the connection port of the terminal without disrupting the flexible tab, and the flexible tab is only actuated (or flexed) for releasing the external connector from the connection port. In other words, the flexible tab is capable of flexing to a connector release position when the actuator engages and deflects a portion of the flexible tab. The flexible tab may be configured an individual component associated with each respective connection port or the flexible tab may be a portion of a common flexible tab component comprising a plurality of flexible tabs on a single-component.

The terminal may have a connection port that is configured for receiving the external connector comprising a latching trigger and/or a latch. The external connector is received in an adapter of the terminal for optical mating with an internal connector of the terminal. The latching trigger of the respective external connectors are used as a releasing mechanism for engaging the latch of the external connector such as used on LC connector or the like.

When deflected by the actuator of the terminal, the flexible tab engages the latching trigger of the external connector pushing it downward onto a latch of the external connector (i.e., to a connector release position) so that the external connector may be released from the respective connection port of the terminal. In other embodiments, the flexible tab may be configured for directly cooperating with the latch of the external connector such as when the external connector does not have a latching trigger, rather than engaging the latching trigger if desired. The concepts disclosed may be used with any suitable external connector such a LC type, SC type or other suitable type of connector having a latching trigger or latch for releasing the connector from an adapter of the terminal.

The terminal concepts disclosed are modular and/or adaptable for supporting different types of connectors for optical mating by changing certain parts of the terminal such as changing the adapter and/or adapter interface insert, thereby configuring the terminal for optical mating for the desired connectors. By way of explanation, the adapter and/or adapter interface insert may be configured for a LC type of connectors or SC type of connectors. Likewise, the flexible tab may be configured for cooperating with a latch of the external connector or cooperating with the latching trigger of the external connector as desired.

Of course, the terminal concepts disclosed may be used in any suitable applications such as in-home networks, multi-dwelling units (MDUs), office buildings or the like. For instance, the concepts disclosed herein may also be suitable for fiber optic networks such as for Fiber-to-the-location (FTTx) and 5G applications, and are equally applicable to other optical applications as well including indoor, industrial, wireless, or other suitable applications. Additionally, the concepts disclosed may be used with fiber optic connectors having any suitable footprint or construction. Various designs, constructions, or features for fiber optic terminals are disclosed in more detail with respect to explanatory embodiments as discussed herein and may be modified or varied as desired.

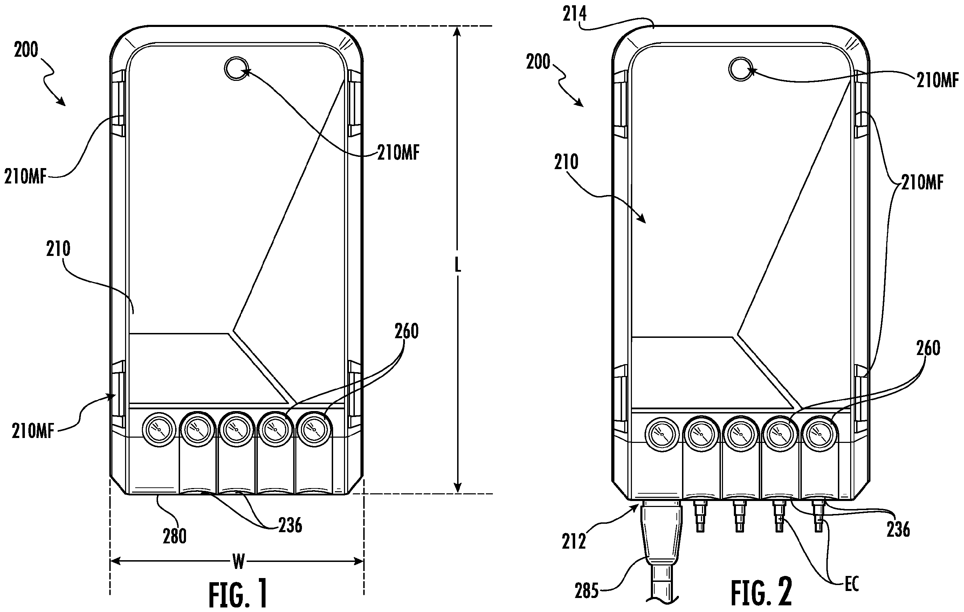

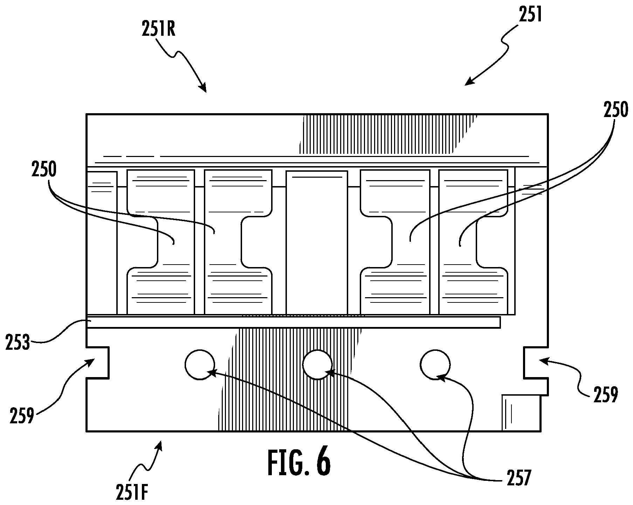

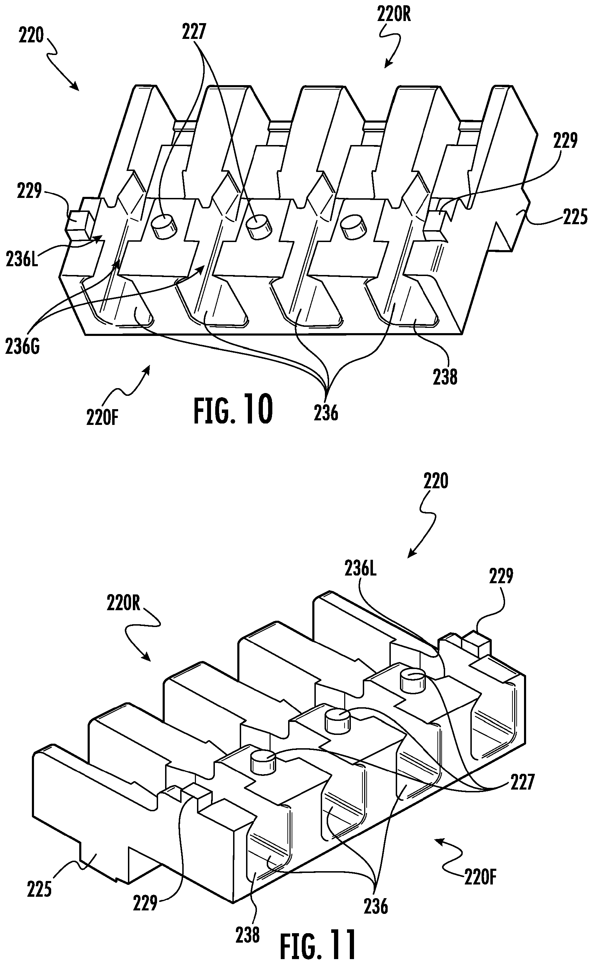

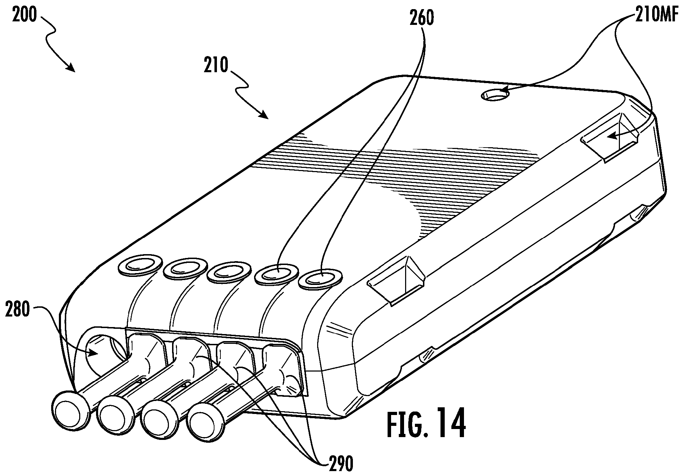

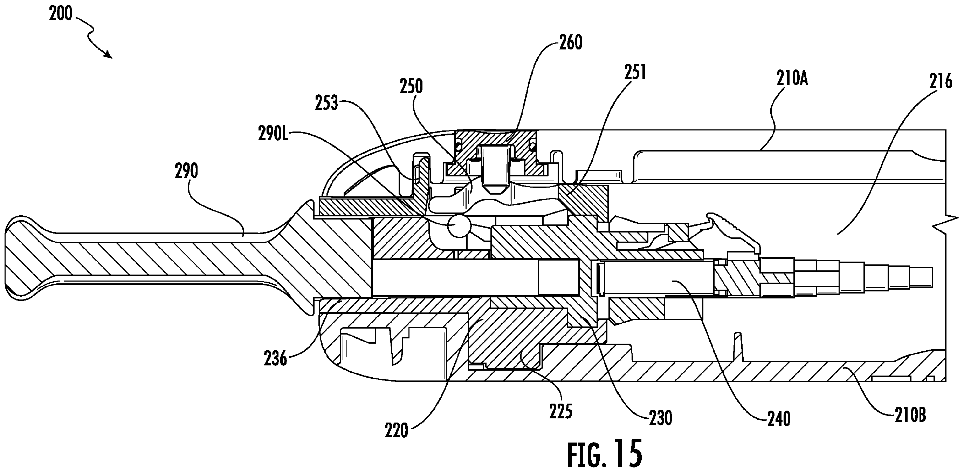

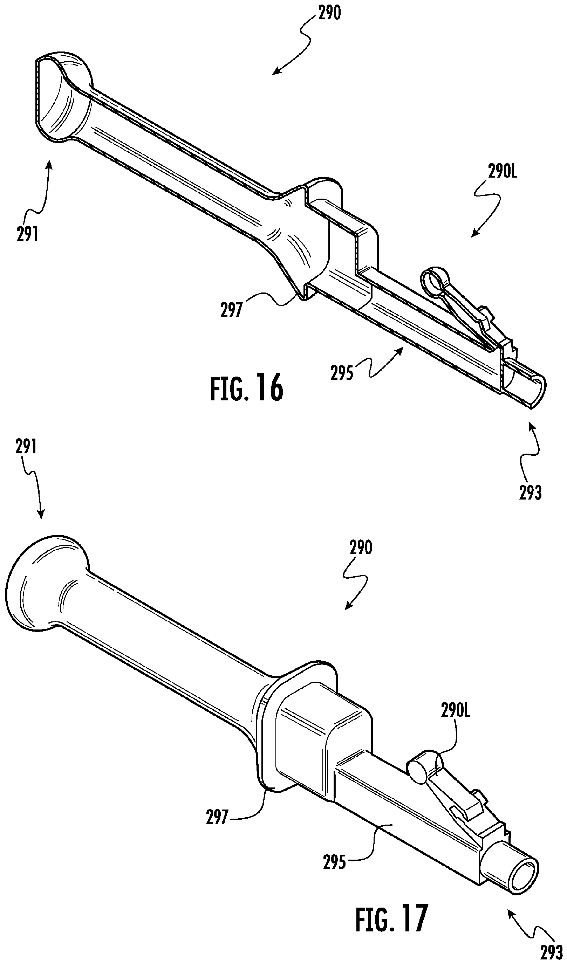

**FIGS. 1-6** depict various views of an explanatory terminal 200 for depicting the disclosed concepts. **FIGS. 6-9** depict a plurality of flexible tabs 250 that are ganged together as a common flexible tab component 251 for use a component within the terminal 200. **FIGS. 10-13** depict views of the adapter interface insert 220 that are ganged together for forming portions of the respective connection ports or connection port opening and configured for external fiber optic connectors comprising a latching trigger or the like. **FIGS. 14** **and** **15** depict terminal 200 with dust plugs 290 disposed in respective connection ports 236 for inhibiting dirt, debris and the like from entering the connection ports, and **FIGS. 16 and 17** depict perspective views of the dust plug 290.

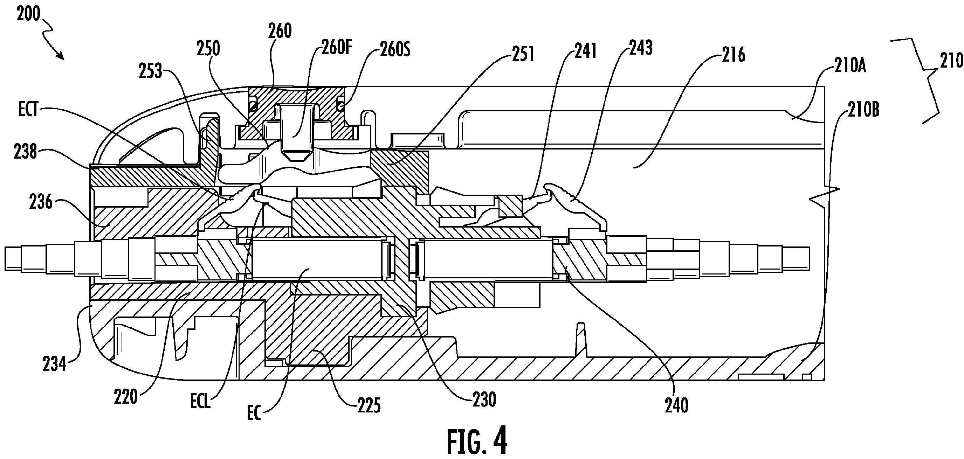

**FIG.** 1 shows a top perspective view of an explanatory terminal 200 having a shell 210 that defines an internal cavity 216 of the terminal 200 such as depicted in **FIG. 4****.** Terminals may have any suitable size or shape as desired and may be re-enterable or not as desired. Terminal 200 comprises at least one connection port 236 disposed on the terminal 200 for receiving a suitable external fiber optic connectors (EC) for making an optical connection with the terminal. The explanatory terminal 200 shown has four connection ports 236 in a linear row as numbered, but other terminals may have any suitable number of connection ports 236 as desired. Further, the terminal 200 may have the connection ports 236 arranged in any desired configuration such as having the connection ports in multiple rows, or on more than one end, etc.

One or more input optical fibers may be attached to the terminal 200 by way of a fiber optic connector or as tether cable that enters into the terminal 200. In other words, one or more optical signals from one or more optical fibers are inputted to the terminal at the input and one or more optical signals are outputted at the respective connection ports of the terminal as output signals.

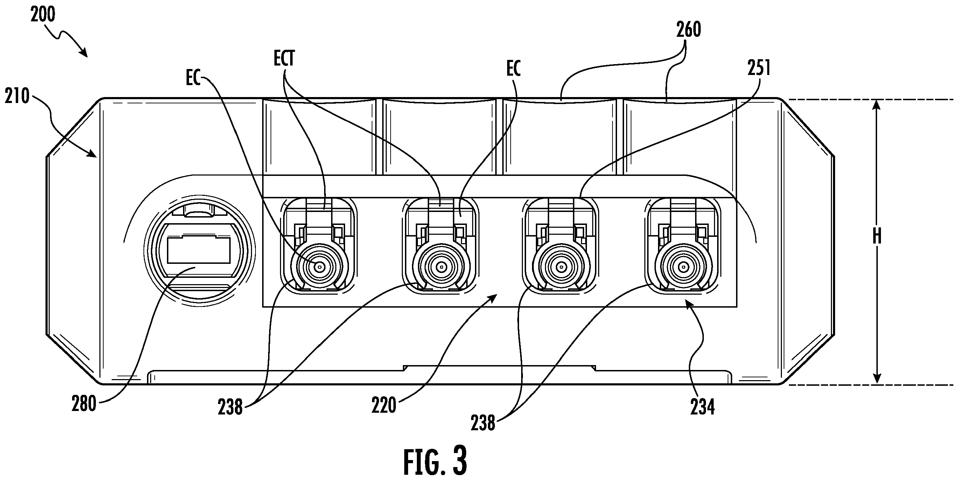

Illustratively, terminals 200 may also have one or more input ports 280 for receiving an input tether 285 as shown in **FIGS. 1 and 2****.** **FIG. 3** depict the input port for receiving a suitable external input connector so input optical signals may optically connect to terminal 200. The input optical signals from the input connection or input optical fibers may be routed to the various connection ports 236 (e.g., output ports) of the terminal 200 as desired for distributing optical signals using terminal 200. For instance, optical fibers inside the terminal 200 may have direct wiring from the input port 280 to the various connection ports 236 for optical communication, or the optical fibers from the input port 280 may be routed to one or more splitters, couplers or wavelength division multiplexers (WDM) disposed within the cavity 216 of the terminal and then routed to the connection ports 236 as desired.

**FIG. 2** is a top perspective view of terminal 200 with an input fiber optic tether 285 shown attached at the input port 260 on the left-side of the connection ports 236 along with a plurality of external fiber optic connectors (EC) disposed in respective connection ports 236 on the right-side. **FIG. 3** depicts a front view of the explanatory fiber optic terminal of **FIG. 2** with the input connector port 280 on the left-side and a plurality of external fiber optic connectors (EC) to the right of the input connection port 260 disposed in respective fiber optic connection ports 236.

Generally speaking, terminal 200 comprises a shell 210 comprising a body and one or more connection ports 236 disposed on a first end or portion 212 of terminal 200. The connection ports 236 or input port 280 are configured for receiving and retaining suitable external connectors (EC) as shown in **FIG. 2** for making optical connections with internal connector 240 of the terminal 200.

The internal connectors 240 shown in **FIG. 4** have a LC footprint, but other types of internal connectors are possible for use such as a SC type connector for optical mating with a suitable external connector (EC). Internal connectors 240 or external connectors (EC) may use a latch or other key for orientating the alignment of the connectors within adapter 230. Additionally, adapter 230 may comprise a retention feature or geometry (not numbered) for seating or securing the adapter(s) 230 in the terminal 200 adjacent to the connection ports 236.

Connection ports 236 each comprises a respective optical connector opening 238 extending from an outer surface 234 of the terminal 200 toward or into a cavity 216 of the terminal 200 and defining a portion of a connection port passageway. By way of explanation, at least one connection port 236 may be formed from one or more components such as an adapter interface insert 220, shell 210 or both the adapter interface insert 220 and the shell 210 as desired. For instance, the connection port 236 may molded as a portion of shell 210 or the connection port 236 may be formed by the adapter interface for allowing modular adaptability for different connector type by selecting the desired adapter interface for use. Terminal 200 may also comprises an input port 280 that is similar to the connection ports 236, but may be configured for a multifiber connector or not. As shown, the connection ports 236 or input port 280 may comprise a marking indicia such as an embossed number or text, but other marking indicia are also possible. For instance, the marking indicia may be on the actuator 260 such as text or the securing features may be color-coded to indicate fiber count, input or output for the associated connection port or input port.

Terminal 200 may have the input connection port 280 disposed in any suitable location. As used herein, "input connection port" is the location where external optical fibers are received or enter the device, and the input connection port does not require the ability to make an optical connection, but may use an input tether cable if desired. Other configurations are possible besides an input connection port 280 that receives an external connector. Instead of using a input connection port that receives a connector, terminals 200 may be configured for receiving an input tether 285 attached to the terminal 200 at the input connection port 280 such as represented in **FIG. 2****.**

Terminal 200 may have the input connection port 260 disposed in an outboard position of the array of connection ports 236, on another side of the terminal, or disposed in a medial portion of array of connection ports 236 as desired.

Terminal 200 has one or more optical fibers 250 routed from the one or more connection ports 236 toward an input connection port 280 in a suitable fashion inside cavity 216 for optical communication using terminal 200. The internal connectors 240 may be are attached to optical fibers 250 that are routing through an optical splitter, wavelength division multiplexer (WDM) or the like for optical communication with the optical fiber(s) that are in optical communication with the input port 280 as known in the art.

The input connection port 280 receives one or more optical fibers and then routes the optical signals as desired such as passing the signal through 1:1 distribution, routing through an optical splitter, WDM or passing optical fibers through the terminal 200. Splitters allow a single optical signal to be split into multiple signals such as 1xN split, but other splitter arrangements are possible such as a 2xN split. For instance, a single optical fiber may feed input connection port 280 and use a 1x8 splitter within the terminal 200 for allowing eight connection ports 236 for outputs on the terminal 200. The input connection port 280 may be configured in a suitable manner such as a single-fiber or multi-fiber port. The WDM splits the optical signals into different wavelengths for the respective connection ports as known in the art. Likewise, the connection ports 236 may be configured as a single-fiber port or multi-fiber port. For the sake of simplicity and clarity in the drawings, all of the optical fiber pathways may not be illustrated or portions of the optical fiber pathways may be removed in places so that other details of the design are visible.

As depicted in **FIGS. 1 and 2****,** terminal 200 may comprise mounting features 210MF that are integrally formed in the shell 210 or that are separate components attached to shell 210 for mounting the device. By way of example, shell 210 may have mounting features 210MF disposed near first and second ends 212, 214 of shell 210. The mounting feature 210MF adjacent the second end 214 may a through hole with an internal support, and the mounting feature adjacent the first end of terminal may be a mounting tab (not shown) attached to shell 210. However, mounting features 210MF may be disposed at any suitable location on the shell 210. For instance, terminal 200 also depicts a plurality of mounting features 210MF integrally-formed on shell 210 and configured as passageways disposed on the lateral sides. Thus, the user may simply use a fastener such as a zip-tie threaded thru these lateral passageways for mounting the terminal 200 to a wall or pole as desired. Shell 210 may also include one or more notches on the bottom side for aiding in securing the device to a round pole or the like.

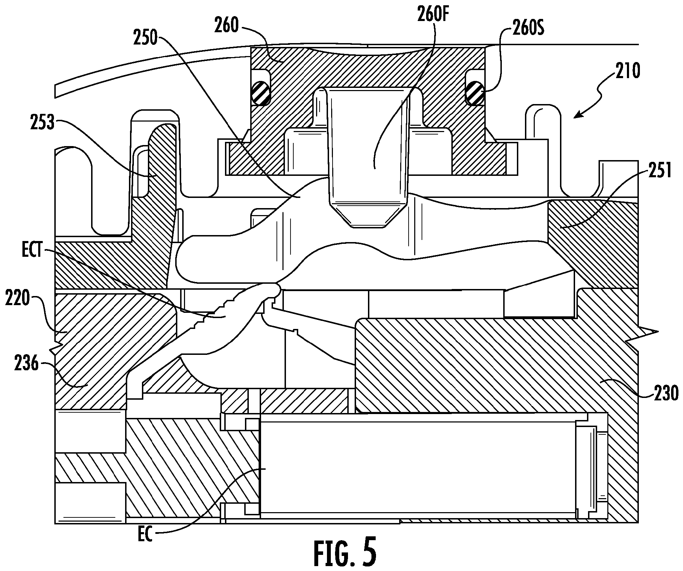

**FIG. 4** depicts a partial sectional view of terminal 200 showing internal construction details for the terminal 200 with the external fiber optic connector (EC) disposed within the connection port 236, and **FIG. 5** is a detailed sectional view of a portion of the terminal 200. Terminal 200 comprises shell 210, at least one connection port 236 comprising an optical connector opening 238 disposed on the terminal 200, an adapter 230 associated with the connection port for mating fiber optic connectors, flexible tab 250 disposed within the shell 210 and associated with the connection port 236, and an actuator 260 capable of translating with respect to the terminal 200. External fiber optic connectors (EC) may each comprise a latching trigger (ECT) for engaging the latch (ECL) of the respective external connector (EC) as shown in **FIG. 4****.**

In some embodiments, a portion of the flexible tab 250 is capable of deflecting for engaging a latching trigger for releasing the external fiber optic connector. When the external connector EC is fully-inserted into the connection port 236, the latch (ECL) is capable of deflecting and springing-back for securing the external connector (EC) within adapter 230. In other words, the latch (ECL) is flexible and springs back to a retain position after being deflected for securing the external connector (EC) in the adapter 230. Consequently, the external connector (EC) is released or secured within the connection port 236 without turning a coupling nut or a bayonet like the prior art multiports.

Terminal 200 also comprises one or more adapters 230 for receiving respective internal connectors 240 in alignment with the respective connection port 236 for making the optical connection with the external connector (EC). Adapters 230 may be ganged together for simplifying assembly or may be individual adapter components for each connection port 236 as desired.

When assembled, adapter(s) 230 are aligned with the respective connection port 236 or connection port passageway for optical mating between the respective internal connectors 240 and external connectors (EC). Adapter 230 is suitable for securing an internal (i.e., rear) connector 240 thereto for aligning and registering the internal connector 240 with the connection port 236 for optical mating. One or more optical fibers 250 (not visible) may be routed from the connection port 236 toward an input connection port 260 of the terminal 200. For instance, the internal connector 240 may terminate the optical fiber 250 for optical connection at connection port 236 and route the optical fiber 250 for optical communication with the input connection port 260.

Internal connector(s) 240 are aligned with the respective passageways of the connection port(s) 236 within the cavity 216 using the adapter(s) 240 of the terminal 200 as shown. The internal connectors 240 are associated with one or more of the plurality of optical fibers 250. Each of the respective internal connectors 240 aligns and attaches to a structure such as the adapter 230 or other structure related to the connection ports 236 in a suitable matter. The plurality of internal connectors 240 may comprise a suitable rear connector ferrule (not visible) as desired and internal connectors 240 may take any suitable form from a simple ferrule that attaches to a standard connector type inserted into an adapter to a standard type of LC or SC connector.

Terminal 200 may also comprise an optional adapter interface insert 220 that can be swapped as desired for the intended external connector (EC). Adapter interface insert 220 allows the shell 210 of the terminal 200 to be adaptable to different external connector types by allowing the adapter interface insert 220 to be swapped out for different external connector types such as LC-type or SC-type of external connectors, instead of having the connector specific geometry molded into the shell 210. Additionally, the adapter 230 and/or the flexible tab 250 may need to be swapped out for a specific connector type as well. In other embodiments, the specific adapter interface insert may be molded as a portion the connection port 236, rather than forming all of the connection port as desired.

Alternatively, the adapter interface may be integrally formed as a portion of the shell 210 so that it is connector specific such as LC-type connector specific and requires fewer parts since an adapter interface insert 220 would not be necessary, but instead these connection port features would be formed as a portion of the shell 210. In other words, a second portion 210B of shell 210 would comprise the adapter interface geometry integrally molded as part of the second portion 210B of shell 210.

As best shown in **FIGS. 4** **and** **5****,** the external fiber optic connector (EC) is disposed within the connection port 236. The external fiber optic connector (EC) is secured within an adapter 230 associated with the connection port 236 for mating with the internal connector 240 of the terminal 200. Specifically, the external fiber optic connector (EC) may be secured within adapter 230 using a latch (ECL) of the external connector (EC). Adapter 230 allows optical mating of the external connector (EC) with an internal fiber optic connector 240. External connector (EC) also comprises a latching trigger (ECT) that is configured for engaging the latch (ECL) for releasing the external connector (EC) by pushing downward onto the latch (ECL) for deflecting the same and releasing the external connector (EC).

As depicted, when fully-inserted into the connection port 236 of terminal 200 the external fiber optic connector (EC) is secured by the latch (ECL) in adapter 230 for optical mating with an internal fiber optic connector 240 of terminal 200. The internal fiber optic connector 240 may also comprise a latch 241 for securing the fiber optic connector 240 in adapter 230 as shown for optical mating. Internal fiber optic connector 240 may also comprise a latching trigger 243 for releasing the fiber optic connector 240 from the adapter 230 if desired.

Optical connections to the devices are made by inserting one or more suitable external fiber optic connectors (EC) into a respective connection port 236, and may be optically disconnected as desired. Connection port 236 is associated with a actuator 260 for releasing the external connector in the terminal 200 and the latch (ECL) of the external connector (EC) is used for securing the external connector (EC) to the connection port 236 for making an optical connection. The actuator 260 advantageously allows the user to quickly and easily release the optical connection at the connection port 236 of terminal 200.

Specifically, the external connector (EC) may be retained within the respective connection port 236 of the terminal by pushing and fully-seating the connector within the connection port 236 to engage the latch (ECL) with adapter 230. To release the external connector (EC) from the respective connection port 236, the actuator 260 is translated by pushing inward for engaging and deflecting the flexible tab 250 so it pushes on the latch trigger (ECT) of the external connector (EC), thereby translating the latch (ECL) to release the external connector (EC) from the adapter 230 and allowing the external connector (EC) to be removed from the connection port 236.

Stated another way, the actuator 260 is capable of releasing the external connector (EC) when the actuator 260 translates within a portion of a securing feature passageway 245 to deflect the flexible tab 250 to release the external connector (EC). Additionally, the full insertion and automatic retention of the external connector (EC) may advantageously allow one-handed installation of the external connector (EC) by merely pushing the connector into the connection port 236 to engage the latch (ECL) with the adapter 230, and pushing the actuator 260 for releasing the external connector (EC). However, other modes of operation for retaining and releasing the connector are possible according to the concepts disclosed.

As shown in **FIGS. 4** **and** **5****,** terminal 200 comprises flexible tab 250 disposed within the shell 210 of the terminal 200, and associated with the respective connection port 236 along with an actuator 260 capable of translating relative to the terminal 200. As depicted, actuator 260 is capable of engaging a portion of the flexible tab 250 for deflecting a portion of the flexible tab 250. The flexible tab 250 is bowed to a normally-open connection position so it does not appreciably deflect the latching trigger (ECT) of the external connector (EC). When the flexible tab 250 is suitably deflected by translating the actuator 260, the flexible tab 250 engages the latching trigger (ECT) of the external connector (EC). Consequently, the latching trigger (ECT) translates and pushes onto the latch (ECL) of the external connector (EC) for releasing the external connector from adapter 230. The flexible tab 250 is capable of deflecting to a connector release position when the actuator 260 engages a portion of the flexible tab 250. In other words, the latch (ECL) that secures the external connector (EC) in adapter 230 is moved from a normally-open position connection position to a release position so that the external connector (EC) is released or releasable from the adapter 230. Further, the flexible tab 250 may bias the actuator 260 to a normally-open position.

As depicted in **FIG. 4****,** the shell 210 may be formed by a first portion 210A and a second portion 210B, but other constructions are possible for shell 210 using the concepts disclosed. Shell 210 may also comprise interlocking features between the first portion 210A and the second portion 210B of the shell 210 such as a tongue and groove construction for alignment or sealing of the device. Additionally, the shell 210 may have features for aligning and seating portions of the adapter interface insert 220, adapter 230, or flexible tabs 250, thereby aligning components and making assembly of the terminal 200 easier and quicker.

Any of the terminals 200 disclosed herein may optionally be weatherproof by appropriately sealing seams of the shell 210 using any suitable means such as gaskets, O-rings, adhesive, sealant, welding, overmolding or the like if desired. To this end, terminal 200 or devices may also comprise a sealing element disposed between the first portion 210A and the second portion 210B of the shell 210. The sealing element may cooperate with shell 210 geometry such as respective grooves or tongues in the shell 210.

The concepts disclosed allow relatively small terminals 200 having a relatively high-density of connections along with an organized arrangement for the connection port 236 of the terminals 200. Shells have a given height H, width W and length L that define a volume for the multiport as depicted in **FIGS. 1** **and** **3**. By way of example, the shell 210 of terminal 200 may define a volume of 800 cubic centimeters or less, other embodiments of the terminal 200 with shell 210 may define the volume of 400 cubic centimeters or less, still other embodiments of terminal 200 with shell 210 may define the volume of 100 cubic centimeters or less as desired. Some embodiments of terminals 200 comprise a port width density of at least one connection port 236 per each 20 millimeters of width W of the terminal 200. Other port width densities are possible such as at least one connection port 236 per each 15 millimeters of width W of the terminal 200.

Likewise, embodiments of terminal 200 may comprise a given density per volume of the shell 210 as desired such as a volume of 800 cubic centimeters or less with at least one connection port 236 per each 20 millimeters of width W of the terminal 200.

As best depicted in **FIG. 5****,** a portion of actuator 260 is disposed within a portion of the securing feature passageway 245 and cooperates with the flexible tab 250 of the associated connection port 260. Consequently, a portion of actuator 260 is capable of translating within a portion of the securing feature passageway 245. Actuator 260 comprises a finger 260F for cooperating with a portion of a flexible tab 250. As depicted, a sealing feature 260S may be disposed on the actuator 260. Sealing feature 260S provides a seal between a portion of the actuator 260 and the securing feature passageway 245 to inhibit dirt, dust and debris from entering the device. As shown, the sealing feature 260S is disposed within a groove of actuator 260.

**FIGS. 6-9** depict views of the flexible tab 250 associated with the respective connection ports 236 of terminal 200. As shown in **FIG. 4****,** the flexible tab 250 is shaped with a bowed-portion to create the desired shape for the normally-open position and is formed so that it is flexible and able to spring-back to the normally-open position after being deformed for releasing the external connector. Flexible tab 250 has a geometry (e.g., shape and thickness) that comprises a bowed-shape (e.g., curved upward) in the normally-open position that may be deformed or flexed to a release position by the actuator using a suitable force. As shown in **FIG. 6****,** the bowed portion of the flexible tab 250 may also comprises a cutout portion (not numbered), thereby tailoring the force required for deformation and allowing easier spring-back of the flexible tab 250 once the deforming force is removed. By way of example, the flexible tab 250 may be formed from any suitable material such as a suitable polymer or spring steel as desired.

The terminal may use a plurality of individual flexible tabs 250 or the flexible tabs 250 may be ganged together for ease of assembly and reducing the number of components used. Flexible tabs 250 may have one or more alignment features for placing and registering the position of the flexible tabs within the shell 210 of the multiport. Moreover, the flexible tabs 250 may have features such as that inhibit the movement of the same when being deflected.

In this embodiment, a plurality of flexible tabs 250 associated with the respective connection ports 236 of terminal 200 are formed on a common flexible tab component 251 as shown. In this specific embodiment, the flexible tab component 251 is configured for the terminal 200 having four connection ports 236 using four flexible tabs 250 that are formed on a common substrate, but the concepts may be scaled for any suitable number of connection ports 236 as desired.

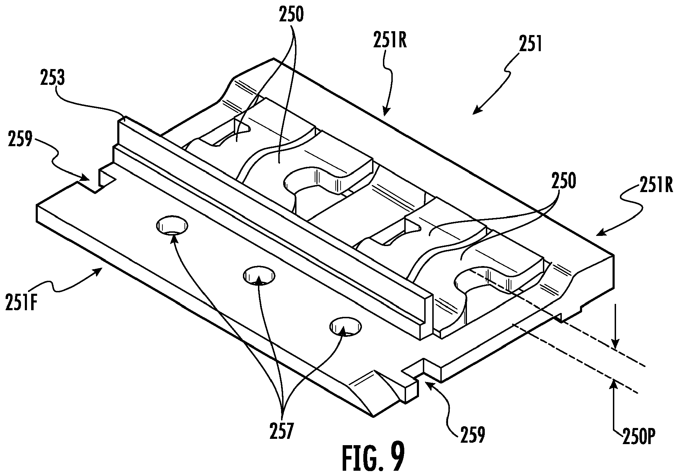

Although the features for securing and aligning the flexible tabs 250 are disclosed with respect to the common flexible tab 251, the concepts may be used with individual flexible tabs 250 as well. As depicted, common flexible tab 251 has a front end 251F and a rear end 251R and the flexible tabs 250 are disposed between the front end 251F and the rear end 251R and bow upward toward the actuator 260 when assembled. As best shown in **FIG. 9****,** the flexible tabs 250 may be bowed or protrude upward by a distance 250P at the top of the bow in a relaxed state (e.g., not deflected).

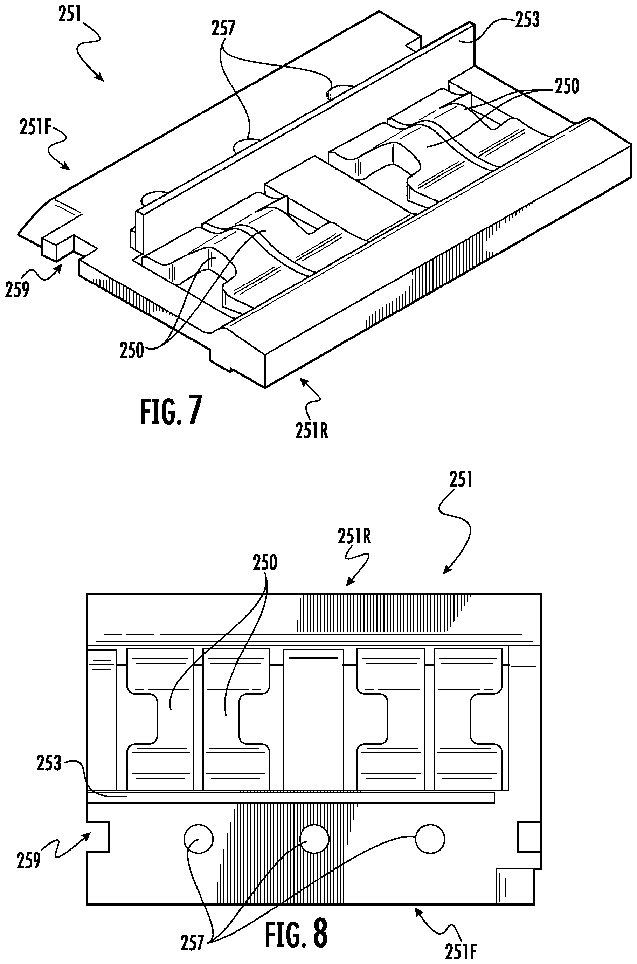

Common flexible tab 251 comprises a ridge 253 as best shown in **FIG. 7** that cooperates with the shell 210 and inhibits movement of the component in the Z-direction. Specifically, the ridge 253 fits into a groove of the first portion 210A of shell 210 as best shown in **FIG. 5****.** Other features of the flexible tab 250 or common flexible tab 251 may cooperate with the shell or other components of the terminal 200 as desired.

Common flexible tab 251 or flexible tab 250 may have other features for alignment or securing as well. For instance, common flexible tab 251 or flexible tab may also include one or more holes 257 for cooperating and aligning the component with the adapter interface insert 220. More specifically, the holes 257 may cooperate with complimentary pins 227 disposed on the adapter interface insert 220, thereby registering the common flexible tab 215 with the adapter interface insert 200. Common flexible tab 251 may also have one or more notches 259 at the end portions for cooperating with the adapter interface insert 220 or shell 210. More specifically, the notches 259 may cooperate with complimentary protrusions 229 disposed on the adapter interface insert 220 when assembled.

**FIGS. 10-12** are perspective views of the adapter interface insert 220 of terminal 200. As depicted, adapter interface insert 220 has a front end 220F and a rear end 220R for forming a portions of the respective connection ports 236 of the terminal. Specifically, this adapter interface insert 220 comprises a plurality of passageways 236 from the front end 220F to the rear end 220R sized for receiving a portion of the respective external connectors (EC) for the terminal 200, but other suitable inserts are possible using the concepts disclosed. The respective passageways are sized for the desired external connector (EC) as desired such as a LC type or SC type of connector.

Each of the connection port 236 portions of the adapter interface insert 220 also has an open side formed with a groove 236G for permitting the latch (ECL) and latching trigger (ECT) of the respective external connectors (EC) to pass through when inserting the same into the connection port 236.

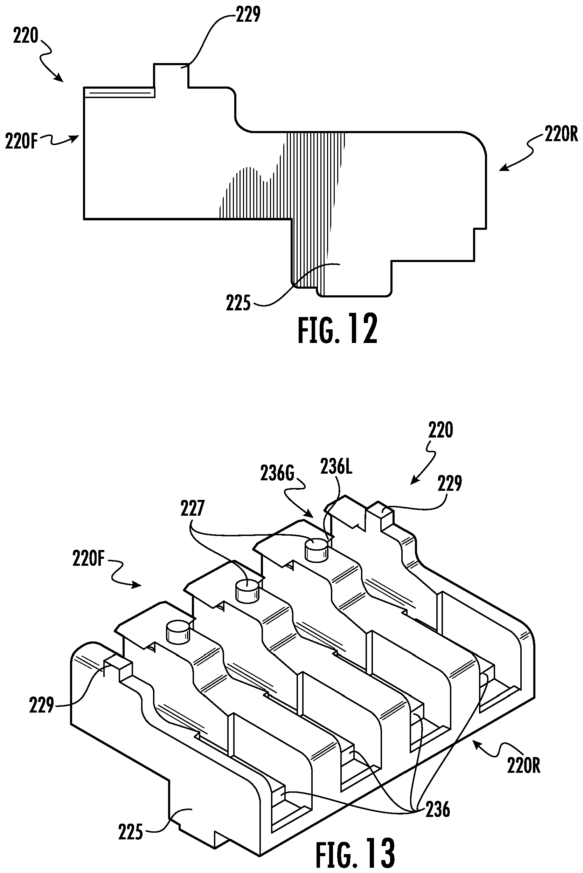

As best shown in **FIG. 12****,** the adapter interface insert 200 may also have geometry for aligning and securing the same into a portion of the shell 210 when assembled. As best shown in **FIG. 4****,** the adapter interface insert comprises a lug 225 that cooperates with a second portion 210B of shell 210 for registering the component in position relative to the shell 210. Thereafter, the adapter 230 may have cooperating geometry for aligning and securing the adapter 230 to adapter interface insert 220, and the common flexible tab 251 can cooperate with the adapter interface insert 220 and adapter 230 as depicted. Consequently, when the components are assembled within the shell 210 they have a proper registration for the connection ports 236 and actuator 260 and are held securing in place for proper operation.

**FIG. 14** is a perspective view of the explanatory terminal 200 having a plurality of dust plugs 290 disposed within respective connection ports 236 of the terminal 200. The dust plugs 290 inhibit dirt, dust and debris from entering the respective connection ports 236. Dust plugs 290 may be removed from the respective connection ports for inserting a suitable external connector and making an optical connection with the terminal 200. **FIG. 15** is a sectional view of terminal 200 showing dust plug 290 disposed within the connection port 236 of terminal 200. As depicted, the actuator 260 may cooperate with the flexible tab 250 for deflecting a latching arm 290L of the dust plug 290 for releasing the same from the adapter 230 releasing the dust plug 290 from the respective connection port 236. Thereafter, the dust plug may be removed from the connection port 236. The latching arm 290L engages with the adapter 230 once fully-inserted into the connection port 236 due to the spring action of the latching arm 290L. This cooperation of the flexible tab 250 and actuator 260 with the latching arm 290L of the dust plug 290 is similar to the cooperation of the flexible tab 250 and actuator 260 with latching trigger (ECT) and latch (EC) of the external connector (EC). **FIGS. 16 and 17** are respective sectional and perspective views of the dust plug 290 having a front end 293 and a rear end 291 with a body 295 and a shoulder 297 disposed therebetween. The latching arm 290L is flexible and may spring back to a retain position for securing the same in the adapter 230. The rear end 291 of the dust plug 290 may comprise a grip for aiding the removal or insertion of the dust plug 290 from the connection port 236.

Although the disclosure has been illustrated and described herein with reference to explanatory embodiments and specific examples thereof, it will be readily apparent to those of ordinary skill in the art that other embodiments and examples can perform similar functions and/or achieve like results. It will also be apparent to those skilled in the art that various modifications and variations can be made to the concepts disclosed without departing from the scope of the same. Thus, it is intended that the present application cover the modifications and variations provided they come within the scope of the appended claims.

## Claims

1. A fiber optic terminal (200) comprising:
a shell (210);
at least one connection port (236) disposed on the fiber optic terminal (200) with the at least one connection port (236) comprising an optical connector opening (238) extending from an outer surface (234) of the fiber optic terminal (200) toward a cavity (216) of the fiber optic terminal (200), wherein the at least one connection port (236) is configured for receiving and optically mating an external fiber optic connector;
an adapter (230) associated with the at least one connection port (236) for mating fiber optic connectors;
a flexible tab (250) disposed within the shell (210) and associated with the at least one connection port (236), wherein the flexible tab (250) is bowed to a normally-open connection position; and
an actuator (260) capable of translating relative to the fiber optic terminal (200), wherein the actuator (260) is capable of engaging a portion of the flexible tab (250) for deflecting a portion of the flexible tab (250).

2. The fiber optic terminal of claim 1, wherein the actuator (260) is capable of translating within a portion of at least one securing feature passageway (245) of fiber optic terminal (200).

3. The fiber optic terminal of any one of claims 1-2, wherein the flexible tab (250) is capable of deflecting to a connector release position when the actuator (260) engages a portion of the flexible tab (250).

4. The fiber optic terminal of any one of claims 1-3, wherein the adapter (230) is configured for receiving a portion of an external LC connector inserted into the at least one connection port (236).

5. The fiber optic terminal of any one of claims 1-4, wherein the at least one connection port (236) is configured for receiving an LC connector comprising a latching trigger.

6. The fiber optic terminal of any one of claims 1-5, further comprising an adapter interface insert (220) forming a portion of the optical connector opening (238) and cooperating with the shell (210).

7. The fiber optic terminal of any one of claims 1-6, wherein the flexible tab (250) is a portion of a common flexible tab component (251) that comprises a plurality of flexible tabs.

8. The fiber optic terminal of claim 7, wherein the common flexible tab component (251) comprises at least one alignment feature that cooperates with the adapter interface insert (220).

9. The fiber optic terminal of any one of claims 1-8, wherein the flexible tab (250) deflects to a connector release position when the actuator (260) engages a portion of the flexible tab (250).

10. The fiber optic terminal of any one of claims 1-9, wherein the flexible tab (250) biases the actuator (260) to a normally-open position.

11. The fiber optic terminal of any one of claims 1-10, further comprising one or more optical splitters (275) disposed within the cavity (216).

12. The fiber optic terminal of any one of claims 1-11, further comprising an internal fiber optic connector (240) disposed within the adapter (230).

13. The fiber optic terminal of any one of claims 1-12, the shell (210) comprising a first portion (210A) and a second portion (210B).

14. The fiber optic terminal of any one of claims 1-13, wherein the at least one connection port (236) is a portion of the shell (210).

15. The fiber optic terminal of any one of claims 1-14, wherein the shell (210) defines an internal cavity (216) of the fiber optic terminal.

## Patentansprüche

1. Faseroptischer Anschluss (200), aufweisend:
ein Gehäuse (210);
zumindest einen Verbindungsport (236), der auf dem faseroptischen Anschluss (200) angeordnet ist, wobei der zumindest eine Verbindungsport (236) eine optische Verbinderöffnung (238) aufweist, die sich von einer Außenfläche (234) des faseroptischen Anschlusses (200) in Richtung eines Hohlraums (216) des faseroptischen Anschlusses (200) erstreckt, wobei der zumindest eine Verbindungsport (236) ausgestaltet ist, um einen externen faseroptischen Verbinder aufzunehmen und optisch zu verbinden;
einen Adapter (230), der mit dem zumindest einen Verbindungsport (236) assoziiert ist, zum Verbinden von faseroptischen Verbindern;
eine flexible Lasche (250), die innerhalb des Gehäuses (210) angeordnet ist und mit dem zumindest einen Verbindungsport (236) assoziiert ist, wobei die flexible Lasche (250) zu einer normalerweise offenen Verbindungsposition gekrümmt ist; und
einen Aktuator (260), der relativ zu dem faseroptischen Anschluss (200) translatieren kann, wobei der Aktuator (260) in Wirkeingriff mit einem Anteil der flexiblen Lasche (250) kommen kann, um einen Anteil der flexiblen Lasche (250) umzulenken.

2. Faseroptischer Anschluss nach Anspruch 1, wobei der Aktuator (260) innerhalb eines Anteils von zumindest einem Sicherungselementdurchgang (245) des faseroptischen Anschlusses (200) translatieren kann.

3. Faseroptischer Anschluss nach einem der Ansprüche 1 bis 2, wobei die flexible Lasche (250) zu einer Verbinderlöseposition umgelenkt werden kann, wenn der Aktuator (260) in Wirkeingriff mit einem Anteil der flexiblen Lasche (250) kommt.

4. Faseroptischer Anschluss nach einem der Ansprüche 1 bis 3, wobei der Adapter (230) ausgestaltet ist, um einen Anteil eines externen LC-Verbinders aufzunehmen, der in den zumindest einen Verbindungsport (236) eingeführt wird.

5. Faseroptischer Anschluss nach einem der Ansprüche 1 bis 4, wobei der zumindest eine Verbindungsport (236) ausgestaltet ist, um einen LC-Verbinder aufzunehmen, der einen Rastauslöser aufweist.

6. Faseroptischer Anschluss nach einem der Ansprüche 1 bis 5, des Weiteren aufweisend einen Adapterschnittstelleneinsatz (220), der einen Anteil der optischen Verbinderöffnung (238) bildet und mit dem Gehäuse (210) zusammenwirkt.

7. Faseroptischer Anschluss nach einem der Ansprüche 1 bis 6, wobei die flexible Lasche (250) ein Anteil einer gemeinsamen flexiblen Laschenkomponente (251) ist, die eine Vielzahl flexibler Laschen aufweist.

8. Faseroptischer Anschluss nach Anspruch 7, wobei die gemeinsame flexible Laschenkomponente (251) zumindest ein Ausrichtelement aufweist, das mit dem Adapterschnittstelleneinsatz (220) zusammenwirkt.

9. Faseroptischer Anschluss nach einem der Ansprüche 1 bis 8, wobei die flexible Lasche (250) zu einer Verbinderlöseposition umgelenkt wird, wenn der Aktuator (260) in Wirkeingriff mit einem Anteil der flexiblen Lasche (250) kommt.

10. Faseroptischer Anschluss nach einem der Ansprüche 1 bis 9, wobei die flexible Lasche (250) den Aktuator (260) zu einer normalerweise offenen Position vorspannt.

11. Faseroptischer Anschluss nach einem der Ansprüche 1 bis 10, des Weiteren aufweisend einen oder mehrere optischen Splitter (275), der/die innerhalb des Hohlraums (216) angeordnet ist/sind.

12. Anschluss nach einem der Ansprüche 1 bis 11, des Weiteren aufweisend einen internen faseroptischer Verbinder (240), der innerhalb des Adapters (230) angeordnet ist.

13. Faseroptischer Anschluss nach einem der Ansprüche 1 bis 12, wobei das Gehäuse (210) einen ersten Anteil (210A) und einen zweiten Anteil (210B) aufweist.

14. Faseroptischer Anschluss nach einem der Ansprüche 1 bis 13, wobei der zumindest eine Verbindungsport (236) ein Anteil des Gehäuses (210) ist.

15. Faseroptischer Anschluss nach einem der Ansprüche 1 bis 14, wobei das Gehäuse (210) einen internen Hohlraum (216) des faseroptischen Anschlusses definiert.

## Revendications

1. Terminal à fibres optiques (200) comprenant :
une coque (210) ;
au moins un port de connexion (236) disposé sur le terminal à fibres optiques (200) avec l'au moins un port de connexion (236) comprenant une ouverture de connecteur optique (238) s'étendant d'une surface externe (234) du terminal à fibres optiques (200) vers une cavité (216) du terminal à fibres optiques (200), dans lequel l'au moins un port de connexion (236) est configuré pour la réception et l'accouplement optique d'un connecteur de fibres optiques externe ;
un adaptateur (230) associé à l'au moins un port de connexion (236) pour l'accouplement de connecteurs de fibres optiques ;
une languette flexible (250) disposée à l'intérieur de la coque (210) et associée à l'au moins un port de connexion (236), dans lequel la languette flexible (250) est coudée dans une position de connexion normalement ouverte ; et
un actionneur (260) susceptible de se déplacer par translation par rapport au terminal à fibres optiques (200), dans lequel l'actionneur (260) est susceptible d'entrer en prise avec une partie de la languette flexible (250) pour dévier une partie de la languette flexible (250).

2. Terminal à fibres optiques selon la revendication 1, dans lequel l'actionneur (260) est susceptible de se déplacer par translation dans une partie d'au moins un passage de caractéristique de solidarisation (245) du terminal à fibres optiques (200).

3. Terminal à fibres optiques selon l'une quelconque des revendications 1 à 2, dans lequel la languette flexible (250) est susceptible de dévier vers une position de libération de connecteur lorsque l'actionneur (260) entre en prise avec une partie de la languette flexible (250).

4. Terminal à fibres optiques selon l'une quelconque des revendications 1 à 3, dans lequel l'adaptateur (230) est configuré pour recevoir une partie d'un connecteur LC externe inséré dans l'au moins un port de connexion (236).

5. Terminal à fibres optiques selon l'une quelconque des revendications 1 à 4, dans lequel l'au moins un port de connexion (236) est configuré pour recevoir un connecteur LC comprenant une gâchette de verrouillage.

6. Terminal à fibres optiques selon l'une quelconque des revendications 1 à 5, comprenant en outre un insert d'interface d'adaptateur (220) formant une partie de l'ouverture de connecteur optique (238) et coopérant avec la coque (210) .

7. Terminal à fibres optiques selon l'une quelconque des revendications 1 à 6, dans lequel la languette flexible (250) est une partie d'un composant de languette flexible commun (251) qui comprend une pluralité de languettes flexibles.

8. Terminal à fibres optiques selon la revendication 7, dans lequel le composant de languette flexible commun (251) comprend au moins une caractéristique d'alignement qui coopère avec l'insert d'interface d'adaptateur (220).

9. Terminal à fibres optiques selon l'une quelconque des revendications 1 à 8, dans lequel la languette flexible (250) dévie vers une position de libération de connecteur lorsque l'actionneur (260) entre en prise avec une partie de la languette flexible (250).

10. Terminal à fibres optiques selon l'une quelconque des revendications 1 à 9, dans lequel la languette flexible (250) sollicite l'actionneur (260) dans une position normalement ouverte.

11. Terminal à fibres optiques selon l'une quelconque des revendications 1 à 10, comprenant en outre un ou plusieurs diviseurs optiques (275) disposés à l'intérieur de la cavité (216).

12. Terminal à fibres optiques selon l'une quelconque des revendications 1 à 11, comprenant en outre un connecteur interne de fibres optiques (240) disposé à l'intérieur de l'adaptateur (230).

13. Terminal à fibres optiques selon l'une quelconque des revendications 1 à 12, la coque (210) comprenant une première partie (210A) et une seconde partie (210B).

14. Terminal à fibres optiques selon l'une quelconque des revendications 1 à 13, dans lequel l'au moins un port de connexion (236) est une partie de la coque (210).

15. Terminal à fibres optiques selon l'une quelconque des revendications 1 à 14, dans lequel la coque (210) délimite une cavité interne (216) du terminal à fibres optiques.
